# EUROPÄISCHE PATENTSCHRIFT

(11) **EP 0 918 740 B1**
(45) Veröffentlichungstag und Bekanntmachung des Hinweises auf die Patenterteilung: **06.02.2002**
(21) Anmeldenummer: 97931767.4
(22) Anmeldetag: 03.07.1997
(51) Int. Cl.: C07C 51/41, C08K 5/098, C08J 3/22

(54) **SCHMELZBARE STABILISATORKOMBINATION**
FUSIBLE STABILISER COMBINATION
COMBINAISON STABILISANTE FUSIBLE

(30) Priorität: 08.07.1996 DE 19627258
(43) Veröffentlichungstag der Anmeldung: 02.06.1999
(73) Patentinhaber: CHEMSON POLYMER-ADDITIVE GESELLSCHAFT M.B.H., 9601 Arnoldstein (AT)
(72) Erfinder: SCHILLER, Michael, A-9601 Arnoldstein 267 (AT); HENSEL, Hartmut, A-9073 Viktring (AT); VIDELER, Charles, A-9601 Nötsch 274 (AT); LATTACHER, Emil, A-9601 Arnoldstein 281 (AT); EBNER, Paul, A-9601 Arnoldstein 185 (AT); DOLLESCHAL, Klaus, A-9500 Villach (AT); PACHER, Karoline, A-9556 Liebenfels (AT); UMFAHRER, Claudia, A-9620 Hermagor (AT)
(74) Vertreter: Viering, Jentschura & Partner
(86) Internationale Anmeldenummer: EP9703526
(87) Internationale Veröffentlichungsnummer: WO9801412

(56) Entgegenhaltungen:
- EP-A- 0 565 184
- WO-A-93/16979
- DE-A- 2 827 231
- DE-A- 4 305 944

## Beschreibung

Die Erfindung betrifft eine schmelzbare Stabilisatorkombination für thermoplastische Polymere mit den Merkmalen des Hauptanspruches.

Ein halogenhaltiges thermoplastisches Harz, wie z.B. Polyvinylchlorid (PVC) geht bei Durchführung einer Schmelzverformung in eine Polyenstruktur über, wobei Salzsäure eliminiert und das Polymer verfärbt wird. Um die Thermostabilität des Polymeren zu verbessern, ist es üblich, Metallcarboxylate als Stabilisatoren in das Harz einzuarbeiten. Da jedoch die Einarbeitung der Stabilisatoren allein bei einem längeren Schmelzformverfahren zu einem sogenannten Metallverbrennen führen kann, welches eine Schwärzung des Polymers hervorruft, ist es allgemeine Praxis, einen Costabilisator zuzusetzen.

Da basische Bleisalze ebenso wie andere schwermetallhaltige Stabilisatoren als toxisch eingestuft sind, ist versucht worden, Stabilisierungsalternativen zu finden. Eine Vielzahl von Kombinationen aus anorganischen und organischen Verbindungen sind als Stabilisatoren für halogenhaltige Polymere bekannt.

In der DE 30 19 632 und in der EP 189 899 werden Hydrotalcite als Stabilisatoren vorgeschlagen. Diese Verbindungen sind Mischungen aus Ca/Zn-Metallcarboxylaten in bezug auf die Hitzestabilität und die Transparenz überlegen.

Die unter Verwendung von Hydrotalciten hergestellten Stabilisatoren können allerdings nicht nach einem Schmelzprozeß hergestellt werden, weil der Anteil an anorganischen und somit nichtschmelzenden Bestandteilen 50 bis 60% überschreitet. Deshalb existieren derzeit keine nichttoxischen Stabilisatorkombinationen in Tabletten-, Schuppen- oder Schmelzgranulat-Form, insbesondere für die Stabilisierung von PVC-Folien, Kabelisolierungen oder Drahtummantelungen.

Die meisten Mischungen aus Ca/Zn-Metallcarboxylaten in Kombination mit Costabilisatoren und Gleitmitteln können in verschiedenen Lieferformen wie Pulver, Paste, Granulat, Schuppen oder Tabletten hergestellt werden. Als weniger vorteilhaft hat sich die Pulverform erwiesen, da die Stabilisatorkombination in dieser Lieferform bei der Handhabung staubt, elektrostatische Aufladungen Probleme bereiten und aufgrund unterschiedlicher Schüttgewichte der einzelnen Komponenten Sedimentationen auftreten können, die zur Enthomogenisierung der Mischung führen. Die Pastenform ist zwar staubfrei, erfordert aber eine spezielle Dosiertechnik. Darüberhinaus kann sich auch die Paste enthomogenisieren. Granulate sind zwar auch staubfrei, es ist jedoch nachteilig, daß das Granulat bei bestimmten Anwendungen z.B. bei dünnen Folien, Kabel- oder Drahtummantelungen bzw. -isolierungen dadurch Probleme bereitet, daß es bei der Verarbeitung gröbere Agglomerate hinterläßt.

Die DE 13 00 105 beschreibt die Herstellung von Metallseifen durch ein Verfahren, bei dem bei Temperaturen von 120-140°C die entsprechenden Carbonsäuren mit den entsprechenden Metalloxiden, -hydroxiden und Metallseifen flüchtiger Säuren in der Schmelze hergestellt werden. Es wird zwischen Metallseifen, die einen scharfen Schmelzpunkt (Typ I), wie Blei-, Cadmium-, Zink- und Magnesiumstearat, haben und bei diesen Temperaturen eine dünnflüssige Schmelze bilden und solchen, die gar nicht oder oberhalb von 140°C schmelzen oder in einen plastischen Zustand übergehen, wie zweibasisches Blei-, Calcium-, Barium- und Aluminiumstearat (TYP II), unterschieden. In dem dort beschriebenen Verfahren werden die Metallseife Typ II in einer Schmelze der Metallseife Typ I oder in einem Überschuß der Carbonsäure aus den entsprechenden Metalloxiden, -hydroxiden und Metallseifen flüchtiger Säuren hergestellt und der Carbonsäureüberschuß anschließend in eine Metallseife Typ I durch Umsetzung mit den entsprechenden Metalloxiden, -hydroxiden und Metallseifen flüchtiger Säuren überführt. Die Mengenverhältnisse betragen dabei 10-40 Gew.% der Typ-I-Metallseife und 60-70% der Typ-II-Metallseife. Metallseifen, die nach dem in DE 13 00 105 beschriebenen Verfahren hergestellt wurden, enthalten keine Bestandteile, die oberhalb von 200°C oder gar nicht schmelzen, und sind den erfindungsgemäßen Stabilisatorkombinationen bezüglich der Stabilität unterlegen.

Weiterhin beschreibt die DE 17 94 429 ein Verfahren zur Herstellung von staubfreien Stabilisator-Gleitmittel-Kombinationen für halogenhaltige Polymere auf der Basis von Metallseifen und Bleiverbindungen, die als reprotoxisch eingestuft werden.

Die DE 43 05 944 beschreibt basische Calcium-Zink-Mischseifen, die in einem Gleitmittel gelöst oder suspendiert sind. Basische Metallseifen, die in der DE 43 05 944 beansprucht werden, besitzen eine geringe Stabilität. Zum Erreichen hoher Stabilitäten werden eine Reihe von Costabilisatoren wie zum Beispiel Alcamizer 1, ein von der Fa. Kyowa hergestelltes Hydrotalcit zugegeben. Nachteilig ist jedoch, daß es in der DE 43 05 944 nicht gelungen ist, eine schmelzbare und staubarme Stabilisatorkombination herzustellen. Nachteilig ist weiterhin, daß derartige Systeme nicht für alle Gleitmittel geeignet sind. Insbesondere bei Esterwachsen kommt es bei den in der DE 43 05 944 anzunehmenden Reaktionbedingungen (ca. 100°C und höher sowie dem Einsatz von starken Basen) in Gegenwart kleiner Wassermengen zur teilweisen Verseifung des Esterwachses und somit zur Veränderung des rheologischen Verhaltens.

Der Erfindung liegt die Aufgabe zugrunde, eine schmelzbare Stabilisatorkombination, die sich als Stabilisatorkombination für halogenhaltige Polymere oder Harze (1), insbesondere für weichmacherhaltige Polymere oder Harze eignet, ohne daß diese die oben erwähnten Nachteile der bekannten Stabilisatorkombinationen aufweist und die insbesondere als nichttoxisch eingestuft wird, bereitzustellen.

Diese Aufgabe wird erfindungsgemäß durch Bereitstellung einer schmelzbaren Stabilisatorkombination, die erhältlich ist über die folgenden Verfahrensschritte:
1. Schmelzen mindestens eines Metallcarboxylates (2) aus mindestens einem Metall, ausgewählt aus der Gruppe, die aus Magnesium, Zink oder Mischungen davon besteht, und aus einer höheren Carbonsäure aus der Gruppe, die aus gesättigten und ungesättigten Carbonsäuren mit 8 bis 60 Kohlenstoffatomen besteht,
   wobei das Metallcarboxylat (2) vorgelegt wird oder in situ durch Erhitzen und Rühren der entsprechenden Carbonsäure über ihren Schmelzpunkt und den des zu bildenden Metallcarboxylates hinaus und anschließender Zugabe einer höchstens zu der eingesetzten Carbonsäure stöchiometrischen Menge der entsprechenden Metallverbindung, die aus der Gruppe ausgewählt wird, die aus Metalloxid, Metallhydroxid, Metallcarbonat und/oder basischem Metallcarbonat besteht, in situ hergestellt wird, und
   wobei mindestens ein Metallcarboxylat (2) in situ hergestellt wird;
2. optionale Zugabe mindestens eines weiteren Metallcarboxylates (2) aus einem Metall, ausgewählt aus der Gruppe, die aus Lithium, Natrium, Kalium, Magnesium, Calcium, Barium, Aluminium, Titan, Zirkonium, Eisen, Zink, Zinn oder Mischungen davon besteht, und aus einer Carbonsäure, die auch ungesättigt sein kann, wobei das Metallcarboxylat (2) zugegeben wird oder in situ durch Erhitzen und Rühren der entsprechenden Carbonsäure über ihren Schmelzpunkt und des zu bildenden Metallcarboxylates hinaus und anschließender Zugabe einer höchstens zu der Menge der eingesetzten Carbonsäure stöchiometrischen Menge der entsprechenden Metallverbindung, die aus der Gruppe ausgewählt wird, die aus Metalloxid, Metallhydroxid, Metallcarbonat und/oder basischem Metallcarbonat besteht, hergestellt wird;
3. Zugabe zumindest eines Antioxidationsmittels (3) unter Rühren der Schmelze;
4. Zugabe zumindest einer weiteren Metallverbindung (4), ausgewählt aus der Gruppe, die besteht aus Metallhydroxiden, Metalloxiden, basischen Metallsalzen, synthetischen und/oder natürlichen Mineralien wie Hydrotalcite, Hydrocalumite, Granate, Katoite, Hydrogrossulare oder Ettringiten, mit der allgemeinen Formel MeOₐ(OH)_{b}A_{c} * x H₂O, wobei bedeuten:
   Me ein ein bis vierwertiges Kation, ausgewählt aus der
   Gruppe, bestehend aus Li, Na, K, Mg, Ca, Zr, Sn, Si, Ti,
   Al, Fe sowie Zn oder Mischungen davon, wobei Ti, Sn und/oder Zr in diesen Mischungen auch ein bis zwei
   Alkylsubstituenten mit 1-12 C-Atomen tragen können;
   A ein Anion darstellt, ausgewählt aus der Gruppe, bestehend aus Sulfat, Sulfit, Sulfid, Thiosulfat, Peroxid,
   Peroxosulfat, Hydrogenphosphat, Hydrogenphosphit,
   Carbonat, Halogenide, Nitrat, Nitrit, Hydrogensulfat,
   Hydrogencarbonat, Hydrogensulfit, Hydrogensulfid,
   Dihydrogenphosphat, Dihydrogenphosphit,
   Monocarbonsäureanionen wie Acetat und Benzoat, Amid, Azid,
   Hydroxyd, Hydroxylamid, Hydrazid, Acetylacetonat,
   Phenolat, Pseudchalogenide, Halogenite, Halogenate,
   Perhalogenate, I₃⁻, Permanganat, Dianionen von
   Dicarbonsäuren wie Phthalat, Oxalat, Maleat und Fumarat,
   Bisphenolate, Phosphat, Pyrophosphat, Phosphit,
   Pyrophosphit, Trianionen von Tricarbonsäuren wie Citrat,
   Trisphenolate und/oder Gemische davon;
   a+b ungleich 0 ist;
   c so gewählt ist, daß ein elektroneutrales Molekül gebildet wird;
5. Abformen und Kühlen der Schmelze.

Die erfindungsgemäße schmelzbare Stabilisatorkombination verhindert zuverlässig beim Schmelzformverfahren eine auf das sogenannte Metallbrennen zurückzuführende Schwärzung des geformten Polymers. Erfindungsgemäß wird die Stabilisatorkombination durch einen Schmelzvorgang hergestellt und dann in einer Plättchen-, Plätzchen-, Schuppen-, Tabletten-, Stäbchen- oder Granulatform portioniert. Durch die Bereitstellung der erfindungsgemäßen Stabilisatorkombination ir den oben genannten Formen wird eine staubfreie und optimal dosierbare Zugabe der Stabilisatorkombination zu den halogenhaltigen, thermoplastischen Polymeren ermöglicht. Die erfindungsgemäße Stabilisatorkombination ist homogen. Vorteilhaft ist weiterhin, daß die erfindungsgemäßen Stabilisatorkombinationen wesentlich weniger empfindlich gegenüber Luftfeuchtigkeit, Luftsauerstoff, Kohlendioxid aus der Luft und ähnlichen Umwelteinflüssen sind als nichterfindungsgemäße Granulate oder Pulvermischungen, was insbesondere bei längerer Lagerung sehr vorteilhaft ist.

Ein weiterer Vorteil besteht in der besseren Dispergierbarkeit, wodurch weniger Stippen im verarbeiteten Produkt verursacht werden. Entmischungen, wie sie bei Pulvermischungen aufgrund unterschiedlicher Dichte der einzelnen Bestandteile auftreten können, sind bei den erfindungsgemäßen Stabilisatorkombinationen ausgeschlossen.

Die erfindungsgemäße Stabilisatorkombination wird hergestellt, indem man zumindest ein Metallcarboxylat in situ aus der entsprechenden Carbonsäureschmelze und dem in einer höchstens stöchiometrischen Menge zugesetzten Metalloxid, -hydroxid, - carbonat und/oder basischen Metallcarbonat herstellt und man dieses Metallcarboxylat in der Schmelze hält. In diese Schmelze werden dann bei diesen Temperaturen die weiteren schmelzenden oder erweichenden Bestandteile unter Rühren und anschließend alle nichtschmelzbaren Bestandteile zugegeben.

Vorteilhafterweise werden alle Metallcarboxylate intermediär hergestellt, indem man die entsprechende Carbonsäure auf den Schmelzpunkt des gewünschten Metallcarboxylates erhitzt und bei dieser Temperatur das entsprechende Metalloxid, -hydroxid, -carbonat und/oder basische Metallcarbonat unter Rühren hinzugibt. Durch aufeinanderfolgende Zugaben von Carbonsäuren und/oder Metallkomponenten lassen sich auch Gemische aus verschiedenen Metallcarboxylaten herstellen. Es können aber auch weitere nicht in situ gebildete Metallcarboxylate der Schmelze zugesetzt werden.

Bei der Herstellung der erfindungsgemäßen Stabilisatorkombinationen durch das Schmelzverfahren befinden sich nach der Zugabe der Reaktionskomponenten die zugesetzten Kationen und Anionen im Gleichgewicht, so daß die erfindungsgemäßen Stabilisatorkombinationen nicht mehr mit einer Pulvermischung, die Metallhydroxide, Metalloxide, basische Metallsalze, synthetische und/oder natürliche Mineralien (4) wie Hydrotalcite, Granate, Katoite, Hydrogrossulare, Ettringite, etc., Metallcarboxylate (2), Antioxidantien und/oder deren Metallsalze (3) enthalten, übereinstimmen und möglicherweise nur auf dem hier beschriebenen Wege herstellbar ist. Von Vorteil hat sich auch die Senkung der Viskosität der Schmelze durch geeignete Coupling Agents erwiesen.

Ein Vorteil des Schmelzverfahrens besteht darin, daß die durch die exotherme Neutralisationsreaktion des eingesetzten Metallsalzes (basische Metallsalze, basische Metallcarbonate, Metallcarbonate, Metalloxide und/oder Metallhydroxide) mit der Carbonsäure freiwerdende Energie einen Teil der notwendigen Schmelzwärme erbringen und umständliche Fällungs-, Filtrations-, Trocknungs- und/oder Mahlprozesse vermieden werden. Von Vorteil ist weiterhin, daß Gleitmittel und andere Verarbeitungshilfmittel bei geeigneter Auswahl problemlos eingearbeitet werden können.

Überraschenderweise hat sich gezeigt, daß die erfindungsgemäßen Stabilisatorkombinationen halogenhaltigen, thermoplastischen Harzen und den daraus hergestellten Teilen mindestens gleich gute Eigenschaften verleihen, verglichen mit halogenhaltigen, thermoplastischen Harzen und den daraus hergestellten Teilen, die die nichterfindungsgemäßen oder auf toxischen Bleiverbindungen basierenden Stabilisatorkombinationen enthalten.

Die in der erfindungsgemäßen Stabilisatorkombination verwendeten Carbonsäuren umfassen bevorzugt Carbonsäuren aus der Gruppe, die aus gesättigten und ungesättigten Carbonsäuren mit 8 bis 60, weiter bevorzugt 12 bis 40 Kohlenstoffatomen besteht, insbesondere Stearin-, Palmitin-, Myristin-, Laurin-, Öl-, Olein-, Rizinolsäure und/oder Mischungen davon.

Als Kationen in den Metallcarboxylaten (2) der in den erfindungsgemäßen Stabilisatorkombinationen zugesetzten Metallverbindungen werden bevorzugt Lithium, Natrium, Kalium, Magnesium, Calcium, Barium, Aluminium, Titan, Zirkonium, Eisen, Zink, Zinn einzeln oder in Mischungen davon verwendet. Besonders bevorzugt ist es, wenn Zinkoxid, Zinkhydroxid, Zinkcarbonat, basisches Zinkcarbonat, Magnesiumoxid, Magnesiumhydroxid, Magnesiumcarbonat und/oder basisches Magnesiumcarbonat oder Mischungen davon verwendet werden. Besonders wirksam für den Farbverlauf sind Zinksalze. Deshalb wird es bevorzugt, mindestens ein Zinksalz und/oder ein Magnesiumsalz einer höheren Carbonsäure zu verwenden. Obgleich die obengenannten Metallcarboxylate einzeln verwendet werden können, kann ein noch größerer stabilisierender Effekt bei Verwendung von zwei oder mehr derselben in Kombination erzielt werden.

Die Kationen der eingesetzten Metallsalze (4) werden bevorzugt aus der Gruppe ausgewählt, die besteht aus Li, Na, K, Mg, Ca, Zr, Sn, Si, Ti, A1, Fe sowie Zn oder Mischungen davon, wobei Ti, Sn und/oder Zr in diesen Mischungen auch ein bis zwei Alkylsubstituenten mit 1-12 C-Atomen tragen können.

Die Anionen der eingesetzten Metallsalze (4) werden bevorzugt aus der Gruppe ausgewählt, die im Falle basischer Salze Sulfat, Sulfit. Sulfid, Thiosulfat, Peroxid, Peroxosulfat, Hydrogenphosphat, Hydrogenphosphit, Carbonat, Halogenide, Nitrat, Nitrit, Hydrogensulfat, Hydrogencarbonat, Hydrogensulfit, Hydrogensulfid, Dihydrogenphosphat, Dihydrogenphosphit, Monocarbonsäureanionen wie Acetat und Benzoat, Amid, Azid, Hydroxyd, Hydroxylamid, Hydrazid, Acetylacetonat, Phenolat, Pseudohalogenide, Halogenite, Halogenate, Perhalogenate, I₃⁻, Permanganat, Dianionen von Dicarbonsäuren wie Phthalat, Oxalat, Maleat und Fumarat, Bisphenolate, Phosphat, Pyrophosphat, Phosphit, Pyrophosphit, Trianionen von Tricarbonsäuren wie Citrat, Trisphenolate u.v.m und/oder Gemische davon umfaßt. Unter diesen Anionen der eingesetzten Metallsalze sind Hydroxid, Carbonat, Phosphit und/oder Maleat besonders bevorzugt.

Der erfindungsgemäßen Stabilisatorkombination werden als Antioxidationsmittel (3) bevorzugt Alkylphenole, Hydroxyphenylpropionate, Hydroxybenzylverbindungen, Alkylidenbisphen le, Thiobisphenole und/oder Aminophenole sowie deren Salze oder Mischungen davon zugesetzt. Beispiele für die genannten Antioxidantien, die keine Salze bilden, sind Thioether, sterisch gehinderte Amine und/oder Phosphonite. Insbesonders bevorzugt werden z.B. 2,6-Di-tert.-butyl-4-methylphenol, 2,6-Di-benzyl-4-methyl-phenol, Stearyl-3-(3'-5'-di-tert.-butyl-4'-hydroxy-phenyl)propionat, 4,4'-Thiobis-(3-methyl-6-tert.-butyl-phenol), 4-Nonylphenol, 2,2'-Methylenbis(4-methyl-6-tert.-butylphenol), 2,5-Di-tert.-butylhydrochinon, 4,4',4''-(1-Methyl-1-propanyl-3-yliden)tris[2-(1,1-dimethylethyl)-5-methyl-phenol, deren neutralen oder basischen Lithium-, Magnesium-, Calcium-, Zink- und/oder Aluminiumsalze sowie Gemische der Antioxidantien und/oder deren Salze.

Beispiele für die o.g. Antioxidantien, die keine Salze bilden, sind Thioether, wie Dilaurylthiodipropionat und/oder Distearylthiodipropionat, sterisch gehinderte Amine und/oder Phosphonite.

Während erfindungsgemäß die Schmelze von (2), (3) und (4) bereits Stabilisatorkombinationen für (1) mit hohen Stabilitäten, guter Anfangsfarbe und guter Farbhaltung ergeben, können noch deutliche Verbesserungen der stabilisierenden Eigenschaften erzielt werden, wenn ein oder mehrere bekannte Costabilisatoren für halogenhaltige Polymere zusätzlich verwendet werden. So kann die Kombination mit zumindest einer Substanz (5) als Costabilisator, die aus der Gruppe der 1,3-Diketoverbindungen, der Polyole, der Zeolithe, der Aminosäurederivate und der organischen Ester der phosphorigen 0 Säure ausgewählt wurde, zu einer deutlichen Verbesserung der Anfangsfarbe führen. Außerdem kann die Zugabe von zumindest einer Substanz (6), die aus der Gruppe der Epoxyverbindungen ausgewählt wurde, zu einer deutlichen Verbesserung des Farbverlaufs führen. Die Zugabe von zumindest einer Substanz (5) plus mindestens einer Substanz (6) ist sehr vorteilhaft.

Die Zugabe von wenigstens einem Costabilisator (5) und einem Costabilisator (6) zu der erfindungsgemäßen Stabilisatormischung wird besonders bevorzugt. Die Gruppe der Costabilisatoren (5) ist im folgenden näher erläutert.

Bevorzugt umfaßt die Gruppe der 1,3-Diketoverbindungen Dibenzoylmethan, Stearoylbenzoylmethan, Palmitoylbenzoylmethan, Myristoylbenzoylmethan, Lauroylbenzoylmethan, Benzoylaceton, Acetylaceton, Tribenzoylmethan, Diacetylacetobenzol, p-Methoxystearoylacetophenon, Acetoessigsäureester und Acetylaceton sowie deren Metallsalze, insbesondere die des Lithiums, Natriums, Kaliums, Calciums, Magnesiums, Zinks, Zinns, Titans, Aluminiums und/oder des Eisens.

Die Gruppe der Polyole umfaßt bevorzugt Trismethylolpropan, Di-(trismethylolpropan), Erythritol, Pentaerythritol, Dipentaerythritol, Sorbitol, Mannitol o.ä.

Aus der Gruppe der Zeolithe werden als Costabilisator (5) zu der erfindungsgemäßen Stabilisatorkombination bevorzugt A3-, A4-, A5-Zeolithe, Zeolithe vom Mordenit, Erionit-, Faujasit X-oder Y-Typ und/oder ZSM-5-Zeolithe und/oder Gemische davon zugesetzt. Bevorzugte austauschbare Kationen darin sind Protonen, Ammonium-, Lithium-, Natrium-, Kalium-, Magnesium-, Calcium-, Zink- und/oder Zinn-Kationen.

Bevorzugt werden aus der Gruppe der Aminosäuren bzw. deren Derivaten Glycin, Alanin, Lysin, Tryptophan, Acetylmethionin, Pyrrolidoncarbonsäure, α-Aminocrotonsäure, α-Aminoacrylsäure, α-Aminoadipidinsäure o.ä. sowie deren Ester. Die Alkoholkomponenten dieser Ester umfassen bevorzugt u.a. einwertige Alkohole, wie Methylalkohol, Ethylalkohol, Propylalkohol, i-Propylalkohol, Butylalkohol, α-Ethylhexanol, Octylalkohol, i-Octylalkohol, Laurylalkohol, Stearylalkohol, o.ä., und/oder Polyole, wie Ethylenglykol, Propylenglykol, 1,3-Butandiol, 1,4-Butandiol, Glycerol, Diglycerol, Trismethylolpropan, Pentaerythritol, Dipentaerythritol, Erythritol, Sorbitol, Mannitol o.ä..

Als Ester der phosphorigen Säure werden u.a. Triarylphosphite, wie Triphenylphosphit, Tris(p-nonylphenyl)phosphit o.ä.; Alkylarylphosphite, wie Monoalkyldiphenylphosphite, z.B. Diphenylisooctylphosphit, Diphenylisodecylphosphit o.ä., Dialkylmonophenylphosphite, wie Phenyldiisooctylphosphit, Phenyldiisodecylphosphit o.ä.; und/oder Trialkylphosphite, wie Triisooctylphosphit, Tristearylphosphit o.ä bevorzugt.

Weiterhin bevorzugt umfaßt die Gruppe der Epoxyverbindungen, die als Costabilisator (6) zugegeben werden, u.a. verschiedene tierische oder pflanzliche Öle wie Epoxysojaöl, Epoxyrapsöl o.ä., epoxidierte Carbonsäureester, wie epoxidiertes Epoxymethyloleat, Epoxybutyloleat o.ä., epoxidierte alicyclische Verbindungen, Glycidether, wie Bisphenol-A-diglycidether, Bisphenol-F-diglycidether o.ä.; Glycidester, wie Glycidylacrylat, Glycidylmethacrylat, deren Polymere, Kopolymere o.ä.; und/oder epoxidierte Polymere, wie epoxidiertes Polybutadien, epoxidiertes ABS o.ä.

Vorteilhaft können den mit der erfindungsgemäßen Stabilisatorkombination stabilisierten thermoplastischen Harzen (1) weiterhin die im Stand der Technik bekannten Zusätze (7) wie Weichmacher, Füllstoffe, Gleitmittel, Farbstoffe, Pigmente, Antistatikmittel, oberflächenaktive Agenzien, Schaumbildner, Schlagzähigkeitsmodifizierer und/oder UV-Stabilisatoren zu der Schmelze aus Carbonsäure und Metallsalz zugegeben und eingearbeitet werden, ohne daß diese zu Entmischungen oder anderen Problemen in der erfindungsgemäßen Stabilisatorkombination führen. Gebräuchlich ist insbesondere die Zugabe eines Weichmachers. So können beispielsweise Phthalsäureester, aliphatische dibasische Säure-, Trimellithsäure-, Phosphat-, Carbonsäureester, Epoxyweichmacher, Polyesterweichmacher, chloriertes Paraffin und/oder ähnliche Weichmacher in auf das halogenhaltige thermoplastische Harz bezogenen geeigneten Mengenverhältnissen zugegeben werden.

Formgebende Verfahren, mit denen die erfindungsgemäßen Stabilisatorkombinationen in stabilisierten thermoplastischen Harzzusammensetzungen verarbeitbar sind, sind das Kalandrieren, das Extrudieren, das Spritzgießen, das Blasformen oder andere, dem Fachmann bekannte Verfahren. Polymere, die die erfindungsgemäße Stabilisatorkombination enthalten, werden in den obengenannten Verfahren hervorragend verarbeitet.

Beispiele für das verwendbare, halogenhaltige thermoplastische Harz (1), denen die erfindungsgemäße Stabilisatorkombination zugesetzt werden kann, sind PVC, Polyvinylidenchlorid, chloriertes oder chlorsulfoniertes Polyethylen, chloriertes Polypropylen oder Ethylen/Vinylacetat-Kopolymer. Besonders vorteilhaft sind Harze vom PVC-Typ, d.h. Vinylchlorid-Homopolymere und Kopolymere von Vinylchlorid mit anderen Monomeren.

Die erfindungsgemäße Zusammensetzung weist kein Plate out-Phänomen während des Kalandrierens auf und erlaubt das Extrudieren im Langzeitbetrieb. Darüber hinaus sind die resultierenden Produkte frei von einer Verfärbung.

Die vorliegende Erfindung ist daher ein bemerkenswerter, neuer Beitrag zur Entwicklung des Standes der Technik, insbesondere in der Verarbeitung von thermoplastischen Harzen aus PVC, Polyvinylidenchlorid, caloriertem Polyethylen, chlorsulfoniertem Polyethylen, chloriertem Polypropylen und/oder aus Ethylen/Vinylacetat-Coplymeren sowie anderen halogenhaltigen thermoplastischen Harzen.

Die vorliegende Erfindung wird nachstehend näher beschrieben.

Die Rezepturen für halogenhaltige thermoplastische Harze, in denen die Bestandteile des erfindungsgemäßen Stabilisatorkombination verwendet werden, sind folgende:

| | |
|---|---|
| Metallcarboxylate (2) | 20 bis 70 Gew.-%; vorzugsweise 30 bis 60 Gew.-%; |
| Antioxidantien (3) | 1 bis 20 Gew.-%; vorzugsweise 5 bis 15 Gew.-%; |
| Metallverbindung (4) | 30 bis 70 Gew.-%;vorzugsweise 35 bis 60 Gew.-%; |
| Costabilisator (5) | 0 bis 20 Gew.-%; vorzugsweise 2 bis 15 Gew.-%; |
| Costabilisator (6) | 0 bis 20 Gew.-%; vorzugsweise 2 bis 15 Gew.-%; auf 100 Gew.-%. |

Die Dosierung der erfindungsgemäßen Stabilisatorkombination zum thermoplastischen Harz (1) erfolgt von 0,8 bis 20 phr (per hundred resin - Gewichtsteile auf 100 Gewichtsteile des Harzes), vorzugsweise 1,5 bis 15 phr, insbesondere 2 bis 8 phr.

Wenn eine der Komponenten Carbonsäure, Metallsalz und Antioxidationsmittel fehlt oder der Mengenanteil einer dieser auf das Polymer bezogenen Komponenten von den oben genannten Bereichen abweicht, können die gewünschten Stabilisierungseigenschaften kaum erzielt werden.

Die Erfindung wird durch die folgenden Beispiele näher erläutert, ohne jedoch darauf beschränkt zu sein.

### Beispiel 1

Herstellung der erfindungsgemäßen schmelzbaren Stabilisatorkombination

In Tab. 1 sind die Bestandteile für die Herstellung der erfindungsgemäßen schmelzbaren Stabilisatorkombinationen in der Reihenfolge ihrer Zugabe aufgeführt. Zur Herstellung wurde die Stearinsäure auf 130-170°C unter Rühren erhitzt und dann die angegebene Menge Magnesiumoxid (MgO) zugegeben. Sobald eine klare Lösung erhalten wurde, wurde anschließend die angegebene Menge Zinkoxid (ZnO) zugegeben. Nach dem Erhalt einer klaren Lösung wurden zuerst die niedrigschmelzenden und danach die hoch- oder nichtschmelzenden Bestandteile zugegeben. Nach zwei Stunden Verweilzeit bei 120-170°C wurde die trübe Schmelze auf ein Blech gegossen und Tabletten geformt.

**Tab. 1**

| Bestandteile zur Herstellung der erfindungsgemäßen schmelzbaren Stabilisatorkombination | | | | | | | |
|---|---|---|---|---|---|---|---|
| Beispiel --> | 1A | 1B | 1C | 1D | 1E | 1F | 1G |
| Rohstoff (in g) | | | | | | | |
| Stearinsäure | - | 108.08 | 103.16 | 98.72 | 98.72 | 108.08 | - |
| Ölsäure | 112.68 | - | - | - | - | - | 92.30 |
| MgO | 6.28 | 5.96 | 5.68 | 5.44 | 5.44 | 6.00 | 3.48 |
| ZnO | 4.00 | 3.80 | 3.48 | 3.48 | 3.48 | 3.80 | 6.68 |
| Paraffinwachs^{a)} | - | 18.12 | 16.36 | 14.80 | 14.80 | 18.08 | - |
| DLTDP^{b)} | 25.00 | 23.80 | 22.72 | 21.72 | 21.72 | 23.80 | 25.00 |
| Antioxidans^{c)} | 25.00 | 23.80 | 22.72 | 21.72 | 21.72 | 23.80 | 25.00 |
| DBM^{d)} | - | - | 18.20 | - | 17.40 | - | - |
| StBM^{e)} | - | - | - | 17.40 | - | - | - |
| Alcamizer 1^{f)} | 210.00 | - | - | - | - | - | 150.00 |
| Alcamizer 4^{f)} | - | 200.00 | 190.92 | 200.00 | 200.00 | 142.88 | - |
| 4A Zeolith | - | - | - | - | - | 57.16 | 60.00 |

| | | | | | | | |
|---|---|---|---|---|---|---|---|
| ^{a)} Tropfpunkt 55-77°C, | | | | | | | |
| ^{b)} Dilaurylthiodipropionat, | | | | | | | |
| ^{c)} Stearyl-3-(3'-5'-di-tert.-butyl-4'-hydroxyphenyl)propionat, | | | | | | | |
| ^{d)} Dibenzoylmethan, | | | | | | | |
| ^{e)} Stearoylbenzoylmethan, | | | | | | | |
| ^{f)} Kyowa | | | | | | | |

### Beispiel 2

Herstellung der erfindungsgemäßen schmelzbaren Stabilisatorkombination

In Tab. 2 sind die Bestandteile für die Herstellung der erfindungsgemäßen schmelzbaren Stabilisatorkombinationen (2H) und der nichterfindungsgemäßen Stabilisatorkombination (IIa = Schmelzversuch; IIb = Pulvermischung) in der Reihenfolge ihrer Zugabe aufgeführt. Aus Tab. 2 wird deutlich, daß die erfindungsgemäße Stabilisatorkombination 2H herstellbar ist, wenn man die Metallstearate in situ herstellt. Verwendet man die Metallstearate als Ausgangsstoffe (Versuch IIa) und nicht die in situ-Herstellung, ist die erfindungsgemäße Stabilisatorkombination nicht herstellbar.

**Tab. 2:**

| Vergleich der erfindungsgemäßen Herstellung der erfindungsgemäßen Stabilisatorkombination mit nichterfindungsgemäßen Beispielen. | | | |
|---|---|---|---|
| Verbindung--> | 2H^{a)} | IIa^{b)} | IIb^{c)} |
| Rohstoff (in g) | | | |
| Magnesiumstearat^{d)} | - | 60.61 | 60.61 |
| Zinkstearat ^{e)} | - | 60.61 | 60.61 |
| Stearinsäure | 112.64 | - | - |
| MgO | 2.56 | - | - |
| ZnO | 8.08 | - | - |
| Paraffinwachs^{f)} | 24.24 | 24.24 | 24.24 |
| DLTDP^{g)} | 24.24 | 24.24 | 24.24 |
| Antioxidans^{h)} | 24.24 | 24.24 | 24.24 |
| Alcamizerⁱ⁾ 4 | 206.08 | 206.08 | 206.08 |
| Schmelzbar? | ja | nein | - |
| Schmelzbereiche^{k)} | 73-88°C | - | 40- 45°C |
| | | | 50- 70°C |
| | | | 95-155°C |
| nichtschmelzender | | | |
| Rest? | ja | | ja |
| Schmelzbereiche^{l)} | 47°C | | 45°C |
| | 80°C | | 54°C |
| | | | 90°C |
| | | | 123°C |
| IR/cm-1^{m)} | 3500s | | 3500s |
| | 2900s | | 2900s |
| | 2700s | | 2700s |
| | 1800s | | - |
| | 1600s | | 1600w |
| | 1500w | | 1500s |
| | 1300s | | 1300s |
| | 1200s | | - |
| | 750s | | 750s |
| | 650s | | 650s |
| | 550s | | 550s |

| | | | |
|---|---|---|---|
| ^{a)} Schmelzversuch analog Beispiel 1, erfindungsgemäßer Stabilisator, | | | |
| ^{b)} Schmelzversuch, nichterfindungsgemäßer Stabilisator, | | | |
| ^{c)} Pulvermischung in der Herstellung analog Beispiel 3, nichterfindungsgemäßer Stabilisator, | | | |
| ^{d)} Fa. Greven, Fp≈ 140°C, | | | |
| ^{e)} Fa. Greven, Fp= 118-120°C, | | | |
| ^{f)} Tropfpunkt 55-75°C, | | | |
| ^{g)} Dilaurylthiodipropionat, | | | |
| ^{h)} Stearyl-3- (3'-5'-di-tert.-butyl-4'-hydroxy-phenyl)propionat, | | | |
| ⁱ⁾ Kyowa | | | |
| ^{k)} Reichert-Schmelzpunkt-Mikroskop, nichtkorrigiert, | | | |
| ^{l)} DSC, vgl. Fig. 1 und Fig. 2, | | | |
| ^{m)} BRUKER IFS, vgl. Fig. 3 und Fig. 4. | | | |

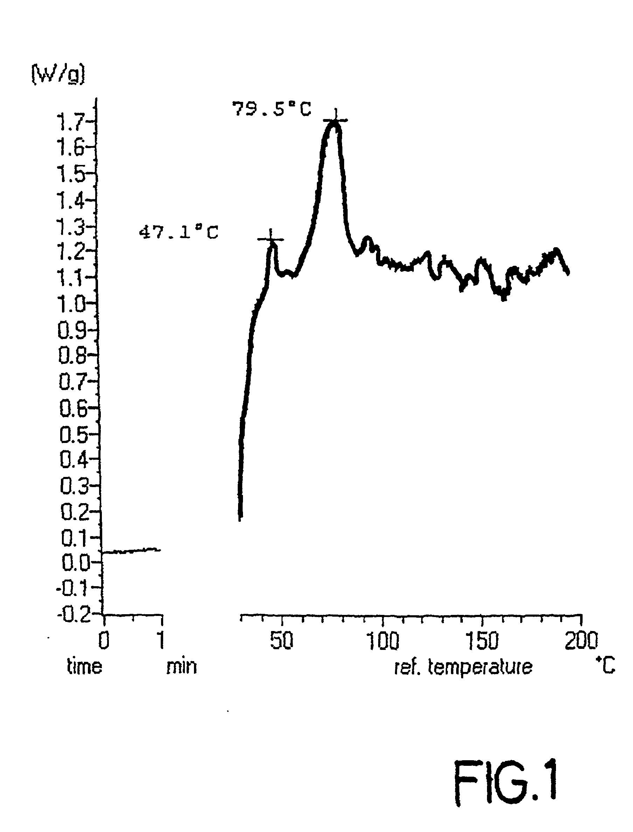

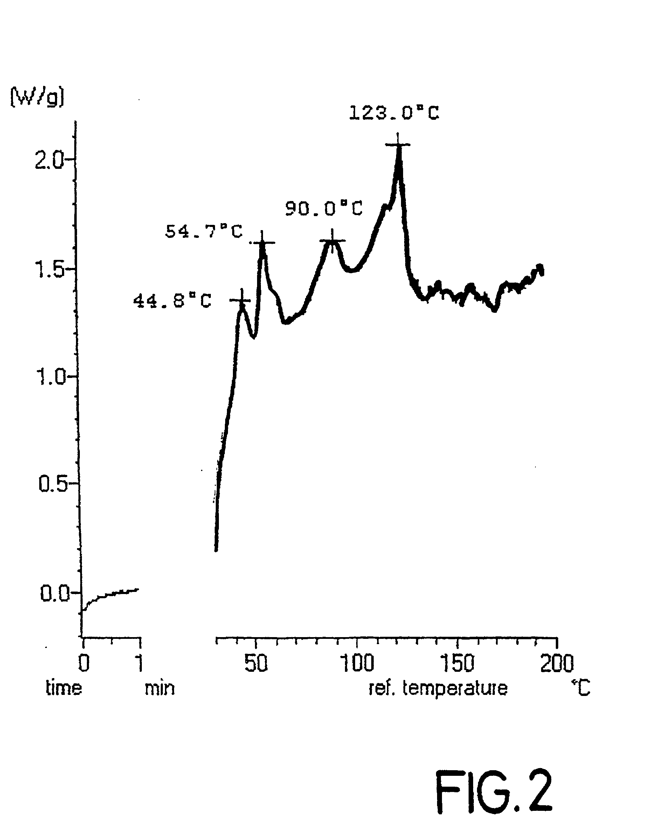

Beobachtungen des Schmelzverhaltens belegen diese Aussage. Unter dem Schmelzpunktmikroskop ist ersichtlich, daß die erfindungsgemäße Stabilisatorkombination 2H relativ einheitlich schmilzt (Fig. 1) und ein bis 300°C nichtschmelzbarer Rückstand bleibt. Weiterhin wird deutlich, daß die nichterfindungsgemäße Pulvermischung IIb mehr oder weniger in ihren Einzelkomponenten aufschmelzen (Fig. 2) und daß ein bis 300°C nichtschmelzbarer Rückstand bleibt.

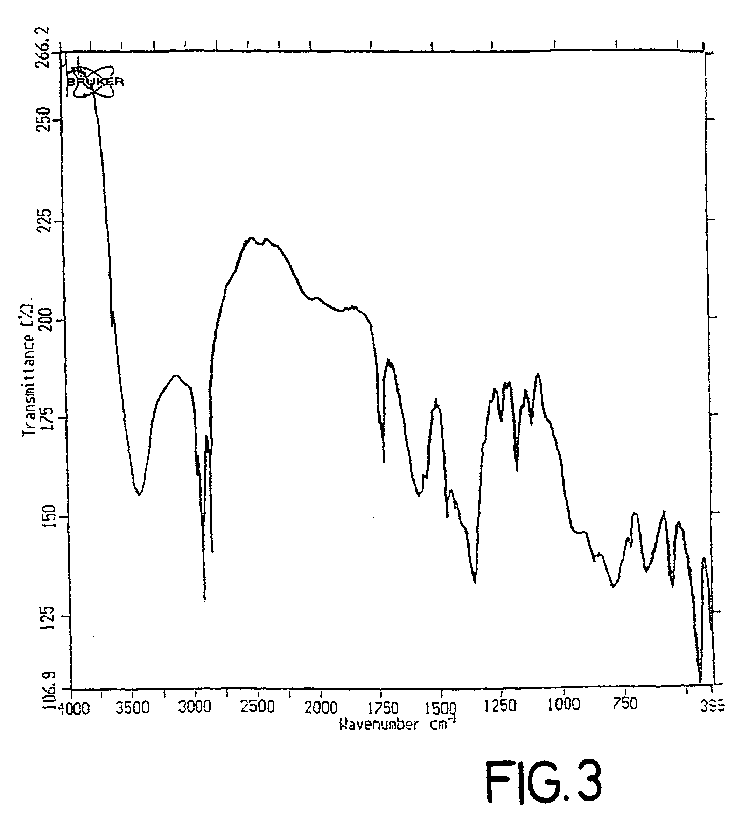

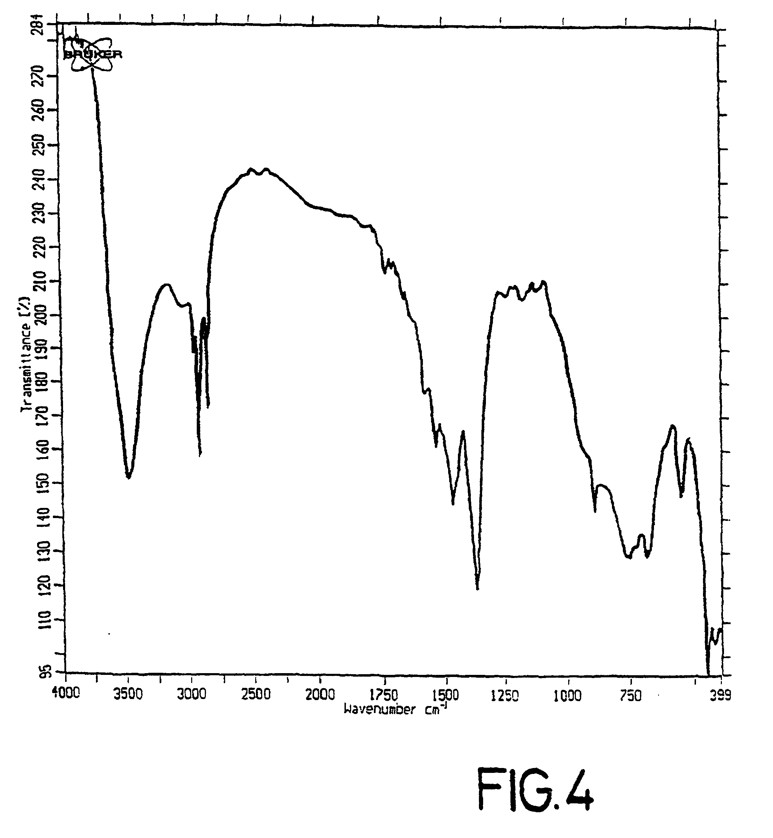

Ein Vergleich der Infrarotspektren der erfindungsgemäßen Stabilisatorkombination 2H (Fig. 3) mit der nichterfindungsgemäßen Stabilisatorkombination IIb (Fig. 4) zeigt deutliche Unterschiede in der Absorption.

Die Schmelzpunkte, die unter dem Mikroskop und bei DSC-Messungen beobachtet wurden, sowie die IR-Spektren (Fig. 3 und Fig.4) belegen, daß es sich bei der erfindungsgemäßen Verbindung 2H und der Pulvermischung IIb um verschiedene Stoffe handelt, die nur über das erfindungsgemäße Verfahren erhältlich sind.

### Beispiel 3

Herstellung einer nichterfindungsgemäßen Stabilisatorkombination

In Tab. 3 sind die Bestandteile für die Herstellung von nichterfindungsgemäßen Stabilisatorkombinationen in der Reihenfolge ihrer Zugabe aufgeführt. Zur Herstellung wurden diese in einem Haushaltsmixer bei minimaler Drehzahl 5 min. homogenisiert.

Tab. 3 Nichterfindungsgemäße Stabilisatorkombination/Chemson Ges.m.b.H..

| Verbindung--> | IIIc | IIId |
|---|---|---|
| Rohstoff (in g) | | |
| Kalkhydrat | 82.50 | - |
| Zinkstearat | 15.00 | - |
| Bisphenol A | 2.50 | - |
| PKX 6000^{a)} | - | 100 |

| | | |
|---|---|---|
| ^{a)} (handelsübliche, pulverförmige, auf Blei basierende Stabilisatorverbindung) | | |

### Beispiel 4

Untersuchung der erfindungsgemäßen schmelzbaren Stabilisatorkombination in PVC

In den nachfolgenden Beispielen wird die Hitzestabilität und die Anfangsfarbe von PVC-Formkörpern, denen erfindungsgemäße Stabilisatoren sowie von Formkörpern, denen zu Vergleichzwecken die nichterfindungsgemäßen Stabilisatoren zugesetzt wurden, bewertet.

Dazu wurden PVC-Harzmassen (100 Teile PVC mit einem K-Wert von 71, 50 Teile Di-i-nonylphthalat (nicht stabilisiert) und 50 Teile Kreide mit der in Tabelle 4 angegebenen Einsatzmenge der Stabilisatorkombination) auf einem Laborwalzwerk für fünf Minuten bei 180°C homogenisiert und plastifiziert. Aus dem so hergestellten etwa 1 mm dicken Walzfell wurde ein Probestreifen von 10 mm Breite herausgeschnitten und im MATHIS-Thermo-Ofen bei 180°C getempert. Im Abstand von 30 min wurde der Teststreifen 23 mm aus dem Ofen herausgefahren, bis sich eine Schwarzverfärbung zeigte (Tab.4).

**Tab. 4**

| Ergebnisse der Untersuchung der erfindungsgemäßen schmelzbaren Stabilisatorkombination in PVC | | | | | | | | | | |
|---|---|---|---|---|---|---|---|---|---|---|
| Verbindung--> | 1A | 1B | 1C | 1D | 1E | 1F | 1G | 2H | IIIc | IIId |
| | <------------------ erfindungsgemäß------------------> | | | | | | | | | |
| Einsatzmenge/ | | | | | | | | | | |
| Teile | 4.0 | 4.0 | 4.0 | 4.0 | 4.0 | 4.0 | 4.0 | 4.0 | 4.0 | 4.0 |
| MTT/min.^{a)} | 270 | 280 | 240 | 290 | 290 | 300 | 310 | 210 | 210 | 250 |
| YI^{b)} nach 0 min. | 44 | 42 | 45 | 43 | 42 | 43 | 42 | 43 | 4.4 | 40 |

| | | | | | | | | | | |
|---|---|---|---|---|---|---|---|---|---|---|
| ^{a)} MATHIS-Thermo-Test, | | | | | | | | | | |
| ^{b)} Yellowness Index nach Normentwurf DIN 6167 | | | | | | | | | | |

Der Vergleich zwischen den erfindungsgemäßen Verbindungen 1A bis 2H und den nichterfindungsgemäßen Vergleichsbeispielen zeigt, daß die erfindungsgemäßen Verbindungen gleiche und z.T. auch bessere Stabilitäten als die Vergleichsbeispiele, die pulverförmige, staubende Stabilisatormischungen enthalten, erreichen. Die Anfangsfarbe (YI nach 0 min.) der erfindungsgemäßen Verbindungen ist mit denen der Vergleichsbeispiele vergleichbar. Berücksichtigt werden muß, daß in Vergleichsbeispiel IIId Bleiverbindungen enthalten sind, die einen Weißpigmenteffekt bei der verwendeten Dosierung ergeben und somit den YI-Wert erniedrigen.

### Figurenbeschreibung

Figur 1 zeigt eine Differentialthermoanalyse (DSC, Differential Scanning Calorimetry) der erfindungsgemäßen Stabilisatorkombination 2H.

### Meßbedingungen:

| Meßgerät: METTLER TOLEDO | |
|---|---|
| Sample: | Mass: |
| 2H | ( 04.10 2.45 mg |
| DSC12E | 16-02-96 |

Figur 2 zeigt eine Differentialthermoanalyse der nichterfindungsgemäßen Stabilisatorkombination IIb.

### Meßbedingungen:

| Meßgerät: METTLER TOLEDO | |
|---|---|
| Sample: | Mass: |
| IIb | ( Pulver 2.58 mg |
| DSC12E | 16-02-96 |

Figur 3 zeigt ein Infrarotspektrum der erfindungsgemäßen Stabilisatorkombination 2H. FTIR-Spektrum, aufgenommen mit Bruker IFS 66 Probebezeichnung: 2H (04.10.95)
Methode : STRANS
Mode : solid
Datum : 16/02/96 Uhrzeit : 9:02

Figur 4 zeigt ein Infrarotspektrum der nichterfindungsgemäßen Stabilisatorkombination IIb.

### FTIR-Spektrum, aufgenommen mit Bruker IFS 66

Probebezeichnung : IIb (Pulver)
Methode : STRANS
Mode : solid
Datum : 16/02/96 Uhrzeit : 8:47

## Patentansprüche

1. Schmelzbare Stabilisatorkombination für thermoplastische Polymere, erhältlich über die folgenden Verfahrensschritte:
1. Schmelzen mindestens eines Metallcarboxylates (2) aus mindestens einem Metall, ausgewählt aus der Gruppe, die aus Magnesium, Zink oder Mischungen davon besteht, und aus einer höheren Carbonsäure aus der Gruppe, die aus gesättigten und ungesättigten Carbonsäuren mit 8 bis 60 Kohlenstoffatomen besteht,
wobei das Metallcarboxylat (2) vorgelegt wird oder in situ durch Erhitzen und Rühren der entsprechenden Carbonsäure über ihren Schmelzpunkt und den des zu bildenden Metallcarboxylates hinaus und anschließender Zugabe einer höchstens zu der eingesetzten Carbonsäure stöchiometrischen Menge der entsprechenden Metallverbindung, die aus der Gruppe ausgewählt wird, die aus Metalloxid, Metallhydroxid, Metallcarbonat und/oder basischem Metallcarbonat besteht, in situ hergestellt wird, und
wobei mindestens ein Metallcarboxylat (2) in situ hergestellt wird;
2. optionale Zugabe mindestens eines weiteren Metallcarboxylates (2) aus einem Metall, ausgewählt aus der Gruppe, die aus Lithium, Natrium, Kalium, Magnesium, Calcium, Barium, Aluminium, Titan, Zirkonium, Eisen, Zink, Zinn oder Mischungen davon besteht, und aus aus einer Carbonsäure, die auch ungesättigt sein kann, wobei das Metallcarboxylat (2) zugegeben wird oder in situ durch Erhitzen und Rühren der entsprechenden Carbonsäure über ihren Schmelzpunkt und des zu bildenden Metallcarboxylates hinaus und anschließender Zugabe einer höchstens zu der Menge der eingesetzten Carbonsäure stöchiometrischen Menge der entsprechenden Metallverbindung, die aus der Gruppe ausgewählt wird, die aus Metalloxid, Metallhydroxid, Metallcarbonat und/oder basischem Metallcarbonat besteht, hergestellt wird;
3. Zugabe zumindest eines Antioxidationsmittels (3) unter Rühren der Schmelze;
4. Zugabe zumindest einer weiteren Metallverbindung (4), ausgewählt aus der Gruppe, die besteht aus Metallhydroxiden, Metalloxiden, basischen Metallsalzen, synthetischen und/oder natürlichen Mineralien wie Hydrotaiciten, Hydrocalumiten, Granaten, Katoiten, Hydrogrossularen oder Ettringiten mit der allgemeinen Formel MeOₐ(OH)_{b}A_{c} * x H₂O, wobei bedeuten:
Me ein ein bis vierwertiges Kation, ausgewählt aus der Gruppe, bestehend aus Li, Na, K, Mg, Ca, Zr, Sn, Si, Ti, Al, Fe sowie Zn oder Mischungen davon, wobei Ti, Sn und/oder Zr in diesen Mischungen auch auch ein bis zwei Alkylsubstituenten mit 1-12 C-Atomen tragen können;
A ein Anion darstellt, ausgewählt aus der Gruppe, bestehend aus Sulfat, Sulfit, Sulfid, Thiosulfat, Peroxid, Peroxosulfat, Hydrogenphosphat, Hydrogenphosphit, Carbonat, Halogenide, Nitrat, Nitrit, Hydrogensulfat, Hydrogencarbonat, Hydrogensulfit, Hydrogensulfid, Dihydrogenphosphat, Dihydrogenphosphit, Monocarbonsäureanionen wie Acetat und Benzoat, Amid, Azid, Hydroxyd, Hydroxylamid, Hydrazid, Acetylacetonat, Phenolat, Pseudohalogenide, Halogenite, Halogenate, Perhalogenate, I₃⁻, Permanganat, Dianionen von Dicarbonsäuren wie Phthalat, Oxalat, Maleat und Fumarat, Bisphenolate, Phosphat, Pyrophosphat, Phosphit, Pyrophosphit, Trianionen von Tricarbonsäuren wie Citrat, Trisphenolate und/oder Gemische davon;
a+b ungleich 0 ist;
c so gewählt ist, daß ein elektroneutrales Molekül gebildet wird;
5. Abformen und Kühlen der Schmelze.

2. Schmelzbare Stabilisatorkombination nach Anspruch 1, **dadurch gekennzeichnet, daß** die eingesetzte höhere Carbonsäure aus der Gruppe der grad- oder verzweigtkettigen aliphatischen Carbonsäuren mit 12 bis 40 Kohlenstoffatomen, die auch ungesättigt sein können, oder Mischungen davon ausgewählt wird.

3. Schmelzbare Stabilisatorkombination nach Anspruch 2, **dadurch gekennzeichnet, daß** die eingesetzte höhere Carbonsäure aus der Gruppe, die besteht aus Stearin-, Palmitin-, Myristin, Laurin-, Öl-, Olein-, Rizinolsäure oder Mischungen davon, ausgewählt wird.

4. Schmelzbare Stabilisatorkombination nach einem der vorhergehenden Ansprüche, **dadurch gekennzeichnet, daß** das Antioxidationsmittel (3) aus der Gruppe ausgewählt wird, die aus Alkylphenolen, Hydroxyphenylpropionaten, Hydroxybenzylverbindungen, Alkylidenbisphenolen, Thiobisphenolen, Dialkylthiodicarboxylaten, insbesondere Dialkylthiodipropionaten, Aminophenolen sowie deren Salze oder Mischungen davon besteht.

5. Schmelzbare Stabilisatorkombination nach einem der vorhergehenden Ansprüche, **dadurch gekennzeichnet, daß** neben dem Antioxidationsmittel mindestens ein Costabilisator [(5),(6)] zugegeben wird, der aus der Gruppe, die aus 1,3-Diketoverbindungen, Polyolen, Zeolithen, Aminosäuren, Aminosäurederivaten, organischen Estern der phosphorigen Säure, Epoxyverbindungen oder Mischungen davon besteht, ausgewählt wird.

6. Schmelzbare Stabilisatorkombination nach einem der vorhergehenden Ansprüche, **dadurch gekennzeichnet, daß** weitere Verbindungen (7), ausgewählt aus Füllstoffen, Gleitmitteln, Farbstoffen, Pigmenten, Antistatikmitteln, oberflächenaktiven Agenzien, Schaumbildnern, Schlagzähigkeitsmodifizierern und/oder UV-Stabilisatoren der Schmelze zugesetzt werden.

7. Thermoplastisches Polymer, **dadurch gekennzeichnet, daß** das Polymer eine schmelzbare Stabilisatorkombination nach einem der Ansprüche 1 bis 6 enthält.

8. Thermoplastisches Polymer nach Anspruch 7, **dadurch gekennzeichnet, daß** das Polymer aus der Gruppe, die PVC, Polyvinylidenchlorid, chloriertes Polyethylen, chlorsulfoniertes Polyethylen, chloriertes Polypropylen und/oder Ethylen/Vinylacetat-Copolymer umfaßt, ausgewählt wird.

9. Thermoplastisches Polymer nach einem der Ansprüche 7 oder 8, **dadurch gekennzeichnet, daß** eine weitere Verbindung (7), die aus der Gruppe Füllstoffe, Gleitmittel, Weichmacher, Farbstoffe, Pigmente, Antistatikmittel, oberflächenaktive Agenzien, Schaumbildner, Schlagzähmodifier, UV-Stabilisatoren, oder Mischungen davon ausgewählt wird, enthalten ist.

## Claims

1. Fusible stabiliser combination for thermoplastic polymers, obtainable by the following process steps:
1. Melting at least one metal carboxylate (2) comprising at least one metal, selected from the group consisting of magnesium, zinc or mixtures thereof, and a higher carboxylic acid selected from the group consisting of saturated and unsaturated carboxylic acids containing 8 to 60 carbon atoms,
where the metal carboxylate (2) is provided as a starting material or formed in situ by heating and stirring said carboxylic acid above its melting point and the melting point of the metal carboxylate to be formed and subsequent addition of an amount of the corresponding metal compound which is, at the most, stoichiometric relative to the amount of the corresponding carboxylic acid, and where the metal compound is selected from the group consisting of metal oxide, metal hydroxide, metal carbonate and/or basic metal carbonate,
whereby at least one metal carboxylate (2) is formed in situ.
2. optional addition of at least one additional metal carboxylate (2) comprising a metal selected from the group consisting of lithium, sodium, potassium, magnesium, calcium, barium, aluminum, titanium, zirconium, iron, zinc, tin or mixtures thereof, and a carboxylic acid that may be unsaturated, with the metal carboxylate (2) being added or being formed in situ by heating and stirring the corresponding carboxylic acid above its melting point and the melting point of the corresponding metal carboxylate to be formed and subsequent addition of an amount of the corresponding metal compound which is, at the most, stoichiometric relative to the amount of the employed carboxylic acid, and where the metal compound is selected from the group consisting of metal oxide, metal hydroxide, metal carbonate and/ or basic metal carbonate,
3. addition of at least one antioxidant (3) to the melt whilst stirring;
4. addition of at least one additional metal compound (4) selected from the group consisting of metal hydroxides, metal oxides, basic metal salts, synthetic and/or natural minerals such as hydrotalcites, hydrocalumites, garnets, katoites, hydrogrossulars or ettringites of the general formula MeOₐ(OH)_{b}A_{c} * x H₂O, with Me being a mono- to quadrivalent cation, selected from the group consisting of Li, Na, K, Mg, Ca, Zr, Sn, Si, Ti, Al, Fe as well as Zn or mixtures thereof, whereby in these mixtures, Ti, Sn and/or Zr can contain one or two alkyl substituents with 1 to 12 C-atoms;
with A being an anion, selected from the group consisting of sulfate, sulfite, sulfide, thiosulfate, peroxide, peroxosulfate, hydrogen phosphate, hydrogen phosphite, carbonate, halides, nitrate, nitrite, hydrogen sulfate, hydrogen carbonate, hydrogen sulfite, hydrogen sulfide, dihydroegen phosphate, dihydrogen phosphite, monovalent anions of monocarboxylic acids such as acetate, benzoate, amide, azide, hydroxide, hydroxylamide, hydrazide, acetylacetonate, phenolate, pseudohalides, halogenites, halogenates, perhalogenates, I₃⁻, permanganate, divalent anions of dicarboxylic acids such as phthalate, oxalate, maleate, fumarate, bisphenolate, phosphate, pyrophosphate, phosphite, pyrophosphite, trivalent anions of tricarboxylic acids such as citrate, trisphenolate and/ or mixtures thereof;
with a+b being unequal to 0;
with c being chosen such that an electrically neutral molecule is formed;
5. moulding and cooling the melt.

2. Fusible stabilizer combination according to claim 1, **characterized in that** the employed higher carboxylic acid is selected from the group consisting of linear and branched-chain aliphatic carboxylic acids containing 12 to 40 carbon atoms, which can also be unsaturated, or mixtures thereof.

3. Fusible stabilizer combination according to claim 2, **characterized in that** the employed higher carboxylic acid is selected from the group consisting of stearic acid, palmitic acid, myristic acid, lauric acid, oleic acid, ricinoleic acid, or mixtures thereof.

4. Fusible stabilizer combination according to any of the preceding claims, **characterized in that** the antioxidant (3) is selected from the group consisting of alkyl phenols, hydroxyphenylpropionates, hydroxybenzene compounds, alkylidenebisphenols, thiobisphenols, dialkylthiodicarboxylates, especially dialkylthiodipropionates, aminophenols as well as their salts or mixtures thereof.

5. Fusible stabilizer combinations according to any of the preceding claims, **characterized in that**, apart from the antioxidant, at least one co-stabilizer [(5), (6)] is added, which is selected from the group consisting of 1,3 - diketo compounds, polyols, zeolites, amino acids, amino acid derivatives, organic esters of phosphorous acid, epoxy compounds or mixtures thereof.

6. Fusible stabilizer combination according to any of the preceding claims, **characterized in that** additional compounds (7), selected from filling agents, lubricating agents, colourants, pigments, antistatic agents, surface-active agents, foaming agents, impact strength modifying agents and/or UV- stabilizers, are added to the melt.

7. Thermoplastic polymer, **characterized in that** the polymer contains a fusible stabilizer combination according to one of claims 1 to 6.

8. Thermoplastic polymer according to claim 7, **characterized in that** the polymer is selected from the group consisting of PVC, poly(vinyliden chloride), chlorinated polyethylene, chlorosulfonated polyethylene, chlorinated poly(propylene) and/or ethylene/vinyl acetate-copolymer.

9. Thermoplastic polymer according to claim 7 or 8, **characterized in that** it contains an additional compound (7) which is selected from the group consisting of filling agents, lubricating agents, softening agents, colorants, pigments, antistatic agents, surface-active agents, foaming agents, impact strength modifying agents, UV- stabilizers and/ or mixtures thereof.

## Revendications

1. Combinaison stabilisante fusible pour polymères thermoplastiques, obtenu par la mise en oeuvre des étapes de procédé suivantes:
1. faire fondre au moins un carboxylate métallique (2) d'au moins un métal choisi parmi le groupe qui consiste en le magnésium, le zinc ou leurs mélanges, et d'un acide carboxylique supérieur du groupe qui est constitué des acides carboxyliques saturés et insaturés ayant 8 à 60 atomes de carbone,
le carboxylate métallique (2) étant fourni ou préparé in situ par chauffage et agitation de l'acide carboxylique approprié au-delà de son point de fusion, et ajout au carboxylate métallique à former d'une quantité au maximum stoechiométrique par rapport à l'acide carboxylique mis en oeuvre du composé métallique approprié, qui est choisi parmi le groupe qui consiste en les oxydes métalliques, les hydroxydes métalliques, les carbonates métalliques et/ou les carbonates métalliques basiques, et
au moins un carboxylate métallique (2) étant préparé in situ;
2. ajouter, le cas échéant, au moins un autre' carboxylate métallique (2) d'un métal choisi parmi le groupe qui consiste en le lithium, le sodium, le potassium, le magnésium, le calcium, le baryum, l'aluminium, le titane, le zirconium, le fer, le zinc, l'étain ou leurs mélanges, et d'un acide carboxylique, qui peut être également insaturé, où le carboxylate métallique (2) est ajouté ou préparé in situ par chauffage et agitation de l'acide carboxylique approprié au-delà de son point de fusion et ajout au carboxylate métallique à former d'une quantité au maximum stoechiométrique par rapport à la quantité d'acide carboxylique mis en oeuvre du composé métallique approprié, qui est choisi parmi le groupe qui consiste en les oxydes métalliques, les hydroxydes métalliques, les carbonates métalliques et/ou les carbonates métalliques basiques ;
3. ajouter au moins un agent antioxydant (3) en agitant la masse fondue ;
4. ajouter au moins un autre composé métallique (4), choisi parmi le groupe qui consiste en les hydroxydes métalliques, les oxydes métalliques, les sels métalliques basiques, les minéraux synthétiques et/ou naturels comme les hydrotalcites, les hydrocalumites, les grenats, les katoïtes, les hydrogrossulaires ou les ettringites de formule générale MeOₐ(OH)_{b}A_{c}.xH₂O, où :
Me désigne un cation mono- à tétravalent, choisi parmi le groupe consistant en Li, Na, K, Mg, Ca, Zr, Sn, Si, Ti, Al, Fe ainsi que Zn ou leurs mélanges, où Ti, Sn et/ou Zr peuvent porter dans ces mélanges, également un à deux substituants alkyle ayant 1 à 12 atomes de carbone ;
A représente un anion choisi parmi le groupe consistant en les sulfate, sulfite, sulfure, thiosulfate, peroxyde, peroxosulfate, hydrogénophosphate, hydrogénophosphite, carbonate, halogénure, nitrate, nitrite, hydrogénosulfate, hydrogénocarbonate, hydrogénosulfite, hydrogénosulfure, dihydrogénophosphate, dihydrogénophosphite, les anions monoacide carboxylique comme l'acétate ou le benzoate, les amide, acide, hydroxyde, hydroxylamide, hydracide, acétylacétonate, phénolate, pseudohalogénure, haloïde, halogénate, perhalogénate, I₃⁻, permanganate, des dianions de diacide carboxylique comme les phtalate, oxalate, maléate et fumarate, les bisphénolate, phosphate, pyrophosphate, phosphite, pyrophosphite, les trianions de triacide carboxylique comme les citrate, trisphénolate et/ou leurs mélanges ;
a+b est différent de 0 ;
c est choisi de sorte que l'on forme une molécule électriquement neutre ;
5. mouler et refroidir la masse fondue.

2. Combinaison stabilisante fusible selon la revendication 1, **caractérisée en ce que** l'acide carboxylique supérieur mis en oeuvre est choisi parmi le groupe des acides carboxyliques aliphatiques linéaires ou ramifiés ayant 12 à 40 atomes de carbone, qui peuvent également être insaturés, ou leurs mélanges.

3. Combinaison stabilisante fusible selon la revendication 2, **caractérisée en ce que** l'acide carboxylique supérieur mis en oeuvre est choisi parmi le groupe qui consiste en l'acide stéarique, l'acide palmitique, l'acide myristique, l'acide laurique, l'acide oléique, l'acide ricinique ou leurs mélanges.

4. Combinaison stabilisante fusible selon l'une quelconque des revendications précédentes, **caractérisée en ce que** l'agent antioxydant (3) est choisi parmi le groupe qui consiste en les alkylphénols, les propionates d'hydroxyphényle, les composés hydroxybenzyle, les alkylidènebisphénols, les thiobisphénols, les thiodicarboxylates de dialkyle, en particulier les thiodipropionates de dialkyle, les aminophénols ainsi que leurs sels ou leurs mélanges.

5. Combinaison stabilisante fusible selon l'une quelconque des revendications précédentes, **caractérisée en ce que** outre l'agent antioxydant, on ajoute au moins un costabilisant [(5), (6)], qui est choisi parmi le groupe qui consiste en les composés 1,3-dicétone, les polyols, les zéolithes, les acides aminés, les dérivés d'acide aminé, les esters organiques des acides phosphoriques, les composés époxyde ou leurs mélanges.

6. Combinaison stabilisante fusible selon l'une quelconque des revendications précédentes, **caractérisée en ce que** l'on ajoute à la masse fondue d'autres composés (7), choisis parmi les charges, les lubrifiants, les colorants, les pigments, les agents antistatiques, les agents tensioactifs, les agents moussants, les agents modifiant la résistance aux chocs et/ou les stabilisants contre les U.V.

7. Polymère thermoplastique, **caractérisé en ce que** le polymère contient une combinaison stabilisante fusible selon l'une quelconque des revendications 1 à 6.

8. Polymère thermoplastique selon la revendication 7, **caractérisé en ce que** le polymère est choisi parmi le groupe qui comprend le PVC, le poly(chlorure de vinylidène), les polyéthylènes chlorés, les polyéthylènes chlorosulfonés, les polypropylènes chlorés et/ou les copolymères éthylène/acétate de vinyle.

9. Polymère thermoplastique selon l'une quelconque des revendications 7 ou 8, **caractérisé en ce que** qu'il contient un autre composé (7) qui est choisi parmi le groupe des charges, lubrifiants, plastifiants, colorants, pigments, agents antistatiques, agents tensioactifs, agents moussants, agents modifiant la résistance aux chocs, agents stabilisants contre les U.V. ou leurs mélanges.
